(19)

**Europäisches Patentamt**
**European Patent Office**
**Office européen des brevets**

(11)  **EP 4 525 374 B1**

(12)  # EUROPEAN PATENT SPECIFICATION

(45) Date of publication and mention
of the grant of the patent:
**24.12.2025  Bulletin 2025/52**

(21) Application number: **23810976.3**

(22) Date of filing: **19.05.2023**

(51) International Patent Classification (IPC):
***H04L 12/413*** (2006.01)

(52) Cooperative Patent Classification (CPC):
**H04L 12/40143; H04L 12/40065; H04L 12/40169;
H04L 12/413; H04L 12/4135;** H04L 47/24;
H04L 2012/40215

(86) International application number:
**PCT/CN2023/095374**

(87) International publication number:
**WO 2023/226905 (30.11.2023 Gazette 2023/48)**

(54) **FRAME COLLISION RATE CALCULATION METHOD FOR FRAME ON CAN BUS, AND CAN BUS RESOURCE MINIMIZATION METHOD**

VERFAHREN ZUR BERECHNUNG DER RAHMENKOLLISIONSRATE FÜR RAHMEN AUF EINEM CAN-BUS UND VERFAHREN ZUR MINIMIERUNG VON CAN-BUS-RESSOURCEN

PROCÉDÉ DE CALCUL DE TAUX DE COLLISION DE TRAME POUR UNE TRAME SUR UN BUS CAN, ET PROCÉDÉ DE RÉDUCTION AU MINIMUM DE RESSOURCES DE BUS CAN

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.05.2022  CN 202210567859**

(43) Date of publication of application:
**19.03.2025  Bulletin 2025/12**

(73) Proprietor: **SHENZHEN POWEROAK NEWENER CO., LTD**
**Shenzhen, Guangdong 518000 (CN)**

(72) Inventors:
• **MA, Hui**
**Shenzhen, Guangdong 518000 (CN)**
• **LEI, Jianhua**
**Shenzhen, Guangdong 518000 (CN)**
• **GUO, Zhihua**
**Shenzhen, Guangdong 518000 (CN)**
• **LI, Fan**
**Shenzhen, Guangdong 518000 (CN)**
• **QIN, Geng**
**Shenzhen, Guangdong 518000 (CN)**
• **LI, Haiyang**
**Shenzhen, Guangdong 518000 (CN)**

(74) Representative: **Santarelli**
**Tour Trinity**
**1 bis Place de la Défense**
**92400 Courbevoie (FR)**

(56) References cited:
CN-A- 103 327 511     CN-A- 103 823 780
CN-A- 105 205 536     CN-A- 105 429 837
CN-A- 107 645 455     CN-A- 114 650 195
CN-A- 114 726 726     US-A1- 2004 068 556
US-A1- 2014 358 397     US-A1- 2018 234 326
US-A1- 2020 174 471

• YU YUNKUI, ZHANG RENZHONG, ZHANG
LIQUN, WANG JUN: "Research on information
collision detection and optimal configuration of
ship optical fiber LAN", 1996 CHINESE
CONTROL CONFERENCE PROCEEDINGS;
SEPTEMBER 15-20, 1996, CHINESE
AUTOMATION SOCIETY, CN, 30 September 1996
(1996-09-30) - 20 May 1996 (1996-05-20), CN,
pages 1243 - 1246, XP009550635

**(Cont. next page)**

• "Doctoral Dissertations", 1 November 2012, JILIN UNIVERSITY, China, article WANG WEI: "Research and Implementation of Scheme for Resource Allocation Based on Voice Prioirty Strategy under the GSM/EGPRS Network", pages: 1 - 62, XP009550634

**Description**

Technical field

The present invention relates to the technical field of data transmission, and in particular, relates to a frame collision rate calculation method for a frame on a CAN bus and a CAN bus resource minimization method.

Background of the Invention

In the automobile industry, various electronic control systems have been developed because of the requirements for safety, comfort, convenience, low power consumption, and low cost. Due to the different data types used for communication and different reliability requirements among these systems, there are many cases where multiple buses are involved, which correspondingly increases the number of wire harnesses. In order to meet the needs of "reducing the number of wire harnesses" and "carrying out high-speed communication of large amounts of data through multiple LANs", an automobile-oriented CAN communication protocol was developed in 1986 by the German electrical manufacturer Bosch Company.

CAN, the full name of which is Controller Area Network, is a data protocol bus proposed by Bosch Company of German in 1985. It is currently widely used in distributed real-time control fields such as automotive electronics and industrial automation. As compared to general communication buses, CAN bus data communication features outstanding reliability, real-time performance and flexibility. The CAN bus has attracted more and more attention because of its good performance and unique design. It is most widely used in the automotive field, and some well-known automobile manufacturers in the world have adopted the CAN bus to realize data communication between the internal control system and various detective and executive mechanisms in the automobiles. At the same time, due to the characteristics of the CAN bus itself, it has been applied to the fields of automatic control, aerospace, navigation, process industry, machinery industry, textile machinery, agricultural machinery, robots, computer numerical control machine tools, medical apparatuses and instruments, sensors or the like, instead of being limited to the automobile industry, and thus it is known as the computer local area network in the field of automation. The emergence of CAN has provided strong technical support for distributed control systems to realize real-time and reliable data communication among various nodes. CAN has formed an international standard and has been recognized as one of the most promising field buses.

The data segment of the frame for the CAN bus allows at most 8 bytes and uses a short frame structure, and thus the transmission time is short and the probability of being interfered with is low. However, as the load rate of the bus increases, frame collisions on the bus are inevitable. In order to enhance reliability, during the development of product protocols by using the CAN bus, usually frames are sent periodically or a random waiting time is added to the frame to be sent to prevent the occurrence of frame collision events, but this undoubtedly reduces the communication efficiency and causes a waste of communication resources, as can be seen in document US 2020/174471 A1.

It shall be noted that, the information disclosed in the above background section is only used for understanding the background of the present application, and therefore may include information that does not constitute prior art known to those of ordinary skill in the art.

Summary of the Invention

Aiming at overcoming the shortcomings of the prior art that the frame collision rate cannot be calculated and thus bus resources cannot be optimized, the present invention provides a frame collision rate calculation method for a frame on a CAN bus and a CAN bus resource minimization method.

In order to achieve the above objectives, the present invention provides the following technical solutions according to independent claims 1 and 8.

A frame collision rate calculation method for a frame on a CAN bus includes calculating the frame collision rate of the frame, based on an Erlang B formula in the queuing theory according to an CAN bus communication rate, a sending frequency and a frame length of the frame.

In some embodiments, frames on the CAN bus include multiple priorities, and the frame collision rate of the frame of each priority is calculated in the descending order of the priorities, wherein the frame collision rate of the frame of the highest priority is calculated directly using the Erlang B formula; while the frame collision rate of the frame of each of the remaining priorities is calculated using the Erlang B formula in combination with the cumulative traffic load and overflow traffic load of the priority.

In some embodiments, the frame collision rate $Bp[i]$ of the frame of each priority is calculated as follows:

$$Bp[i] = \begin{cases} ErlangB(A[i], k) = \dfrac{A[i]}{1 + A[i]}, i = 0 \\ \dfrac{ErlangB(L\_S[i], k) \times L\_S[i] - A\_L[i]}{A[i]}, i = 1, 2, \cdots, p - 1 \end{cases}$$

wherein, $i = 0$ represents the highest priority, $i = 1, 2, \cdots, p - 1$ represents the remaining priorities in the descending order, the number of priorities planned to run on the CAN bus is $p$; $A[i]$ represents the traffic load of the priority $i$ relative to the CAN bus, $k = 1$, $L\_S[i]$ represents the accumulated traffic load of the priority $i$, and $A\_L[i]$ represents the overflow traffic load from a higher priority to the priority $i$.

In some embodiments, the traffic load $A[i]$ of the priority $i$ relative to the CAN bus, the accumulated traffic load $L\_S[i]$ of the priority $i$, and the overflow traffic load $A\_L[i]$ from a higher priority to the priority $i$ are calculated respectively as follows:

$$A[i] = \frac{L[i] \times S[i]}{B};$$

$$L\_S[i] = \sum_{0}^{i} A[j]; j = 0, 1, \cdots, i;$$

$$A\_L[i] = \sum_{0}^{i-1} (Bp[m] \times A[m]); m = 0, 1, \cdots, i - 1;$$

wherein $L[i]$ and $S[i]$ respectively represent the sending frequency and the frame length of the frame of the priority $i$, and B represents the current CAN bus communication rate.

A CAN bus resource minimization method comprises the following steps:

S1. setting an initial CAN bus communication rate;
S2. at the CAN bus communication rate in step S1 and on the basis of an Erlang B formula in the queuing theory, calculating a frame collision rate of a frame of each priority, the running of which on a CAN bus is planned;
S3. determining whether the frame collision rate of the frame of each priority calculated in step S2 exceeds an allowable frame collision rate upper limit associated with the respective priority;
when the frame collision rate calculated in step S2 exceed the allowable frame collision rate upper limit, increasing the CAN bus communication rate in step S1, and returning to step S2 for continued iteration;
when the frame collision rate calculated in step S2 does not exceed the allowable frame collision rate upper limit, decreasing the CAN bus communication rate in step S1, and returning to step S2 for continued iteration; and
S4. outputting a minimum communication rate corresponding to not exceeding the allowable frame collision rate upper limit associated with the respective priority.

In some embodiments, in the step S1, a fixed value is given as the initial CAN bus communication rate.

In some embodiments, in the step S1, the initial CAN bus communication rate is calculated by the following formula:

$$B\_x = L[0] \times S[0] \times \frac{1 - Bp\_T[0]}{Bp\_T[0]};$$

wherein $B\_x$ is the initial CAN bus communication rate, $L[0]$, $S[0]$, and $Bp\_T[0]$ respectively represent the sending frequency, the frame length, and the allowable frame collision rate upper limit of the frame of the highest priority.

In some embodiments, the step S2 includes: at the CAN bus communication rate in step S1 and on the basis of an Erlang B formula in the queuing theory, calculating the frame collision rate of the frame of each priority in the descending order of priorities, wherein the frame collision rate of the frame of the highest priority is calculated directly using the Erlang B formula, while the frame collision rate of the frame of each of the remaining priorities is calculated using the Erlang B formula in combination with the cumulative traffic load and overflow traffic load associated with the respective priority.

In some embodiments, the frame collision rate $Bp[i]$ of the frame of each priority is calculated as follows:

$$Bp[i] = \begin{cases} ErlangB(A[i], k) = \dfrac{A[i]}{1 + A[i]}, i = 0 \\ \dfrac{ErlangB(L\_S[i], k) \times L\_S[i] - A\_L[i]}{A[i]}, i = 1, 2, \cdots, p - 1 \end{cases}$$

wherein, $i = 0$ represents the highest priority, $i = 1, 2, \cdots, p - 1$ represents the remaining priorities in the descending order, the number of priorities planned to run on the CAN bus is $p$; $A[i]$ represents the traffic load of the priority $i$ relative to the CAN bus, $k = 1$, $L\_S[i]$ represents the accumulated traffic load of the priority $i$, and $A\_L[i]$ represents the overflow traffic load from a higher priority to the priority i.

In some embodiments, $A[i]$ is calculated as follows:

$$A[i] = \frac{L[i] \times S[i]}{B};$$

wherein $L[i]$ and $S[i]$ respectively represent the sending frequency and the frame length of the frame of the priority $i$, and B represents the current CAN bus communication rate.

In some embodiments, $L\_S[i]$ is calculated as follows:

$$L\_S[i] = \sum_{0}^{i} A[j]; j = 0, 1, \cdots, i.$$

In some embodiments, $A\_L[i]$ is calculated as follows:

$$A_{L[i]} = \sum_{0}^{i-1} (Bp[m] \times A[m]); m = 0, 1, \cdots, i - 1.$$

In some embodiments, the increasing or decreasing of the CAN bus communication rate in the step S3 is performed by a stepwise method and/or a binary search method.

The present invention further provides a computer-readable storage medium with a computer program stored thereon, and the computer program, when executed by a processor, can implement the CAN bus resource minimization method described above.

As compared to the prior art, the technical solutions of the present invention have the following beneficial effects.

In the prior art, there is no specific algorithm for the frame collision rate, so it is impossible to know the frame collision rate under specific circumstances (including the CAN bus communication rate, the sending frequency of the frame of each priority, the frame length of each priority, and the number of priorities), and thus the bus resources cannot be minimized. In the present invention, an algorithm for calculating the frame collision rate based on the Erlang B formula in the queuing theory is provided, and the bus resources are optimized based on the calculated frame collision rate, so that the minimum bus resources required to ensure that the frame collision rate does not exceed the allowed frame collision rate upper limit when the sending frequency and the frame length are fixed can be found out, thereby realizing optimal configuration of bus resources.

A lower CAN bus communication rate means a lower bus bandwidth and less requirements on devices, and at the same time, the lower CAN bus communication rate reduces the probability of being affected by electromagnetic interference generated by other devices and increases the communication reliability. In the present invention, the required minimum bus resources (communication rate) is accurately calculated based on the sending frequency of the frame of each priority and the preset upper limit of the frame collision rate of the frame of each priority, thereby achieving the purpose of flexible resource configuration and optimized resource utilization.

The present invention is applied in the development stage of products using the CAN communication bus, and relates to a design method of the CAN bus. Particularly, in the case of large bus load and simultaneous transmission of frames of multiple priorities, the design efficiency is improved and the bus resource utilization is optimized, so that users of the CAN bus can realize the optimal configuration of the bus resources in the development stage according to different usage scenarios, and CAN bus resources are saved.

Brief Description of The Drawings

FIG. 1 is a flowchart diagram of a CAN bus resource minimization method according to an embodiment of the present invention.

FIG. 2 is a flowchart diagram of a frame collision rate calculation method for a frame of each priority according to an embodiment of the present invention.

FIG. 3 is a flowchart diagram of a method for calculating the required minimum communication rate of the CAN bus according to an embodiment of the present invention.

Detailed Description of the Embodiments

The embodiments of the present invention will be described in detail below. It shall be emphasized that the following description is exemplary only and is not intended to limit the scope and application of the present invention.

The terms "first" and "second" are used for descriptive purposes only and should not be construed as indicating or implying relative importance or implicitly indicating the quantity of the indicated technical features. Therefore, features defined by "first" and "second" may explicitly or implicitly include one or more said features. In the description of the embodiments of the present invention, "multiple" means two or more, unless explicitly and specifically defined otherwise.

When designing and developing products using the CAN bus, the configuration of the CAN bus resources must be planned first. Currently, designers mostly refer to empirical values accumulated in the past. For example, in order to reduce the probability of frame collision events on the bus, the load rate of the CAN bus is generally set below 30%. The load rate can be calculated simply by the number of nodes connected to the bus, the sending frequency of each node and the frame length. A priority mechanism is introduced into the CAN bus, in which each priority competes for the transmission resources of the bus through a non-destructive arbitration mechanism. The CAN bus protocol currently may support at most 8 priorities. The protocol defines that the lower the value of the flag bit of a bit is, the higher the priority of the bit will be. That is, 0x00 has the highest priority, while 0x07 has the lowest priority. If data transmission to the bus is performed simultaneously by high and low priorities, then the frame of the high priority automatically obtains the transmission resources, while the frame of the low priority withdraws from arbitration. The frame of the low priority performs retransmission when the bus resources are idle according to the automatic retransmission mechanism. As a result, a frame collision event occurs for the frame of the low priority. In specific operation scenarios, designers may pay particular attention to the frame collision rate of the frame of a certain priority. However, the frame collision rates of frames of different priorities have a non-linear relationship and cannot be obtained through simple calculations.

In view of the current difficulties in resource configuration planning in the CAN bus development stage, the present invention provides an optimized design method for the CAN bus. First, an algorithm is provided that can accurately calculate the frame collision rate of the frame of each priority. This algorithm uses the Erlang B formula in the queuing theory and it can accurately calculate the frame collision rate of the frame of each priority in a descending order of priorities. Thus, the resource configuration of the CAN bus can be optimized to minimize the bus resources. The method specifically comprises: calculating the frame collision rate of the frame of each priority under a given bus communication rate and frame sending frequency, then comparing the calculated frame collision rate with the preset upper limit of the allowed frame collision rate of the frame of each priority; if the allowed frame collision rate upper limit is exceeded, then increasing the bus bandwidth (i.e., increasing the communication rate); if the allowed frame collision rate upper limit is not exceeded, then decreasing the communication rate; then continuing to calculate the frame collision rate of the frame of each priority at the new communication rate, and comparing the calculated frame collision rate with the allowed frame collision rate upper limit. This cycle continues until the minimum communication rate is calculated at which the frame collision rate of the frame of each priority does not exceed the corresponding allowed frame collision rate upper limit. The bus bandwidth (communication rate) at this point is the minimum bus bandwidth at which the allowed frame collision rate upper limit is not exceeded under the condition of the fixed sending frequency and frame length, thereby achieving optimization of bus resources.

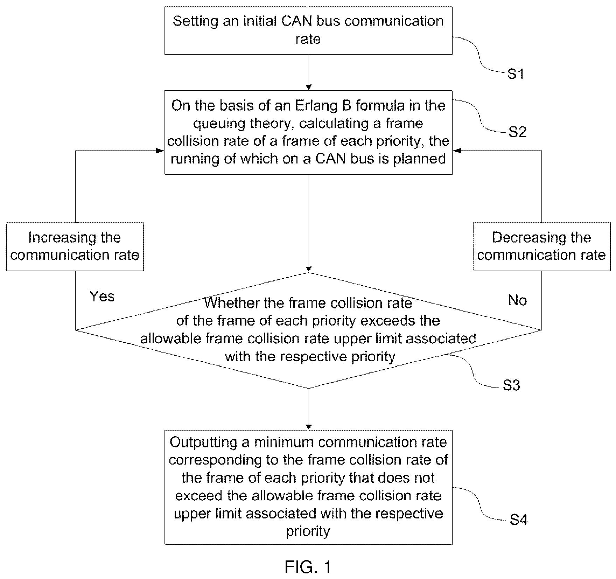

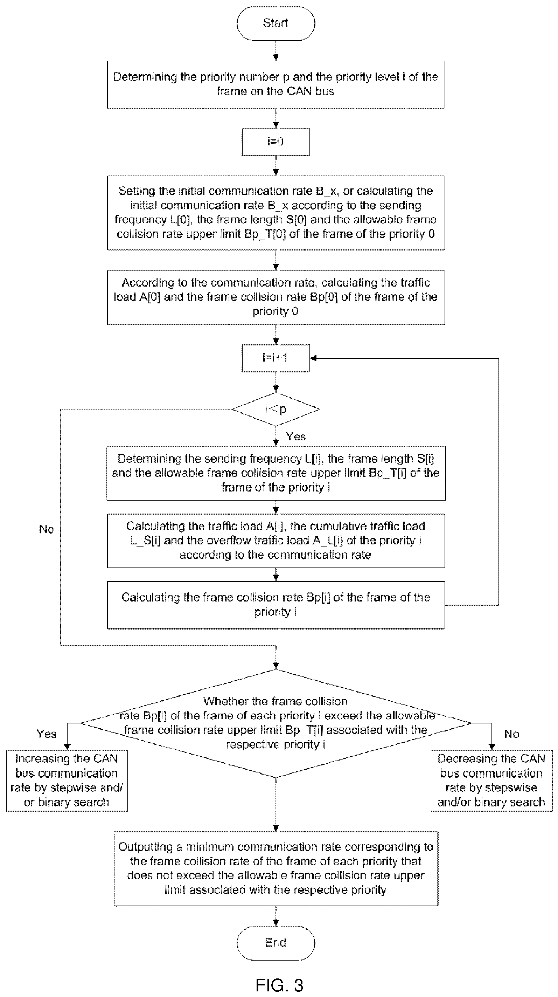

As shown in FIG. 1 and FIG. 3, specific steps of a CAN bus resource minimization method according to an embodiment of the present invention are as follows:

S1. setting an initial CAN bus communication rate.

A smaller or larger initial communication rate $B\_x$ of the CAN bus is given, the value of which may start from 0, and then the cycle is continued to calculate the minimum communication rate that meets the conditions through determination. However, this method is computationally intensive and the calculation speed is slow. In order to reduce the amount of calculation and improve the calculation efficiency, this embodiment uses the following formula to calculate the initial communication rate of the CAN bus:

$$B\_x = L[0] \times S[0] \times \frac{1 - Bp\_T[0]}{Bp\_T[0]};$$

wherein *B_x* is the initial CAN bus communication rate, *L[0], S[0],* and *Bp_T[0]* respectively represent the sending frequency, the frame length, and the allowable frame collision rate upper limit of the frame of the highest priority.

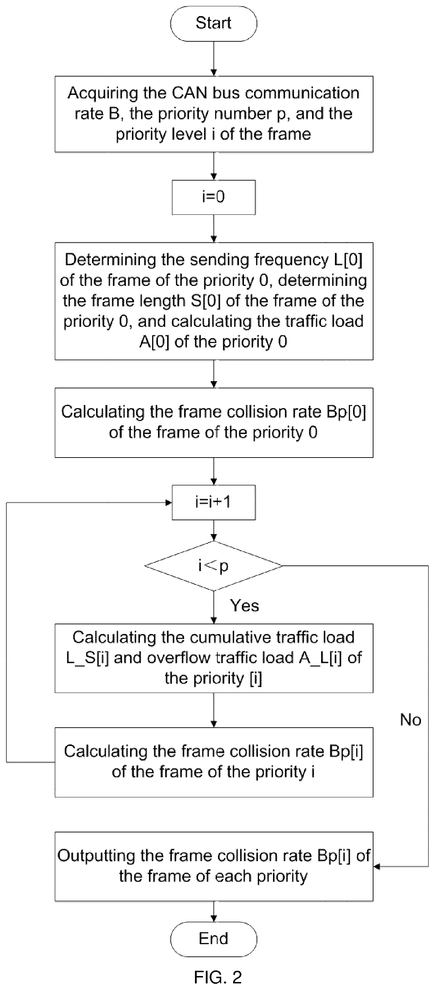

S2. in the case where the CAN bus communication rate and the transmission traffic of each priority are fixed, the frame collision rate of the frame of each priority may be calculated. As shown in FIG. 2, the specific process is as follows: at the CAN bus communication rate in step S1 and on the basis of an Erlang B formula in the queuing theory, calculating a frame collision rate of a frame of each priority, the running of which on a CAN bus is planned, wherein the frame collision rate of the frame of the highest priority is calculated directly using the Erlang B formula, while the frame collision rate of the frame of each of the remaining priorities is calculated using the Erlang B formula in combination with the cumulative traffic load and overflow traffic load of the priority.

Usually, three parameters, namely the frame arrival rate $\lambda$, the service rate $\mu$ ($1/\mu$ is the time required for the service) and the number of servers k, need to be known for the Erlang B formula, that is:Bp = *Erlang B(A, k). A* = $\lambda/\mu$, and *k* is the number of servers. In the present application, when the Erlang B formula is applied to the CAN bus to calculate the frame collision rate, the frames of all the priorities run on a CAN bus, so the number of servers k is normalized, i.e., the CAN bus is regarded as one server, k = 1. L is the sending frequency of a certain priority, which corresponds to $\lambda$ in the Erlang B formula. S is the frame length of the frame of a certain priority, B represents the current CAN bus communication rate, then S/B is the time required for the CAN bus to transmit a frame of a certain priority, which corresponds to $1/\mu$ in the Erlang B formula. Therefore, the Erlang B formula may be rewritten as:

$$Bp = Erlang\,B(L \times \frac{S}{B}, 1).$$

.

The frame collision rate *Bp[i]* of the frame of each priority *i* is calculated as follows:

$$Bp[i] = \begin{cases} ErlangB(A[i], k) = \dfrac{A[i]}{1 + A[i]}, i = 0 \\ \dfrac{ErlangB(L\_S[i], k) \times L\_S[i] - A\_L[i]}{A[i]}, i = 1, 2, \cdots, p - 1 \end{cases}$$

wherein, *i* = 0 represents the highest priority, *i* = 1,2,$\cdots$, *p* - 1 represents the remaining priorities in the descending order, the number of priorities planned to run on the CAN bus is *p*; A[i] represents the traffic load of the priority *i* relative to the CAN bus, *k = 1, L_S[i]* represents the accumulated traffic load of the priority *i,* and *A_L[i]* represents the overflow traffic load from a higher priority to the priority i, wherein the traffic load refers to the ratio of the traffic aggregation of each priority to the transmission rate of the CAN bus.

*A[i]* is calculated as follows:

$$A[i] = \frac{L[i] \times S[i]}{B};$$

wherein *L[i]* and *S[i]* respectively represent the sending frequency and the frame length of the frame of the priority i, and B represents the current CAN bus communication rate.

The cumulative traffic load *L_S[i]* is calculated as follows:

$$L\_S[i] = \sum_{0}^{i} A[j]; j = 0, 1, \cdots, i.$$

The overflow traffic load *A_L[i]* is calculated as follows:

$$A\_L[i] = \sum_{0}^{i-1} (Bp[m] \times A[m]); m = 0, 1, \cdots, i - 1.$$

S3. determining whether the frame collision rate of the frame of each priority calculated in step S2 exceeds an allowable frame collision rate upper limit associated with the respective priority; if yes, increasing the CAN bus communication rate in step S1, and returning to step S2 for continued iteration; and if not, decreasing the CAN bus communication rate in step S1, and returning to step S2 for continued iteration.

The CAN bus communication rate may be increased/decreased in the stepwise manner, and the fixed step size may be adjusted according to the actual situation. For example, the communication rate (i.e., bus bandwidth) is increased/decreased at a fixed step size of 100 bit/s or 1000 bit/s. A smaller fixed step size will give more accurate results, but it will increase the number of iterations of the calculation and the calculation time. On the contrary, a larger fixed step size will reduce the accuracy of the calculation results, but it increases the calculation speed. The selection of a suitable fixed step size depends on the past accumulated experience of designers.

In some other embodiments, the CAN bus communication rate may also be increased/decreased by using binary search. For example, a larger bus communication rate and a smaller bus communication rate are obtained through two or more cycles; at a smaller communication rate (Data1), the frame collision rate of the frame of all the priorities does not exceed the frame collision rate upper limit of the frame of the priority; and at a larger communication rate (Data2), the frame collision rate of the frame of at least one priority exceeds the frame collision rate upper limit of the frame of the priority. Then the communication rate Data3 of the next cycle may be obtained by binary search between [Data1, Data2]. If the frame collision rate of the frame of all the priorities does not exceed the frame collision rate upper limit of the frame of the priority at the communication rate Data3, then the communication rate Data4 of the next cycle is obtained by binary search between [Data1, Data3]. If the frame collision rate of the frame of at least one priority exceeds the frame collision rate upper limit of the frame of the priority at the communication rate Data3, then the communication rate Data4 of the next cycle is obtained by binary search between [Data3, Data2]. The above cycle is continued until the minimum communication rate at which the frame collision rate upper limit of the frame of each priority is not exceeded is found out. As compared to the stepwise search, the binary search can reduce the amount of calculation and greatly speed up the calculation in some cases.

In some other embodiments, the CAN bus communication rate may also be increased/decreased by combining the stepwise method and binary search method.

S4. outputting a minimum communication rate corresponding to the frame collision rate of the frame of each priority that does not exceed the allowable frame collision rate upper limit associated with the respective priority, so as to complete optimization.

**Embodiment** 1:

In a lithium battery energy storage product, an inverter, an IoT communication module and four battery packs are connected together through the CAN bus. These three kinds of devices send data to the CAN bus periodically or irregularly (triggered by events).

The priority of sending frames is set as follows: if it is an alarm information frame or an event-triggered query information frame, then the frame length is set to 128 bits and the frame is set with a high priority (0X02); and if it is a periodic broadcast data frame, then the frame length is set to 256 bits and the frame is set with a low priority (0X06). The design index for the frame collision rate of the frame of the high priority is $\leq 3\%$, while the design index of the frame collision rate of the frame of the low priority is $\leq 10\%$.

Table 1 below shows the content type, the sending frequency and the frame length of the data sent by the inverter module to the CAN bus:

Table 1

| Parts sent periodically | | | |
|---|---|---|---|
| Content | Sending frequency (frames/s) | Frame length (bit) | Priority |
| Inverter type | 1 | 256 | 0X06 |
| Time information | 1 | 256 | 0X06 |
| Device alarm/fault information | 2 | 256 | 0X06 |
| Photovoltaic power generation information | 2 | 256 | 0X06 |
| Detailed information of power grid | 2 | 256 | 0X06 |
| Load information | 2.5 | 256 | 0X06 |
| Inverter information | 2 | 256 | 0X06 |
| Detailed information of the electric generator | 1 | 256 | 0X06 |

(continued)

| Parts sent periodically | | | |
|---|---|---|---|
| Content | Sending frequency (frames/s) | Frame length (bit) | Priority |
| | | | |
| Parts triggered by events | | | |
| Content | Sending frequency (frames/s) | Frame length (bit) | Priority |
| Energy line state | 1 | 128 | 0X02 |
| Device model | 0.4 | 128 | 0X02 |
| PV connection type | 2 | 128 | 0X02 |
| System state | 2 | 128 | 0X02 |
| Working hours statistics | 1 | 128 | 0X02 |
| Historical records | 1 | 128 | 0X02 |
| Sum of annual average power generation capacity | 1 | 128 | 0X02 |
| Sum of power generation capacity in a certain year | 2.5 | 128 | 0X02 |

Table 2 below shows the content type, the sending frequency and the frame length of the data sent by the IoT communication module to the CAN bus:

Table 2

| Parts sent periodically | | | |
|---|---|---|---|
| Content | Sending frequency (frames/s) | Frame length (bit) | Priority |
| Periodical data | 2.5 | 256 | 0X06 |

Table 3 below shows the content type, the sending frequency and the frame length of the data sent by the battery pack module to the CAN bus:

Table 3

| Parts sent periodically | | | |
|---|---|---|---|
| Content | Sending frequency (frames/s) | Frame length (bit) | Priority |
| Pack basic information | 2x4 | 256 | 0X06 |
| Parts triggered by events | | | |
| Content | Sending frequency (frames/s) | Frame length (bit) | Priority |
| Pack expansion information | 3x4 | 128 | 0X02 |
| Pack fault information | 5x4 | 128 | 0X02 |
| About Pack | 1.5x4 | 128 | 0X02 |

Based on the data given in the foregoing tables, the implementation method of the embodiment of the present invention is given below.

In this embodiment, there are only two priorities, namely 0X02 and 0X06, wherein 0X02 is a high priority and 0X06 is a low priority, and the traffic aggregation of each priority is calculated as follows:

The high priority: $128 \times (1 + 0,4 + 2 + 2 + 1 + 1 + 1 + 2.5 + 3 \times 4 + 5 \times 4 + 1.5 \times 4) = 128 \times 48.9 = 6259.2$ bit/s

The low priority: $256 \times (1 + 1 + 2 + 2 + 2 + 2.5 + 2 + 1 + 2.5 + 2 \times 4) = 256 \times 24 = 6144$ bit/s

S1. setting an initial CAN bus communication rate, i.e., a smaller/larger initial communication rate $B\_x$ of the CAN bus is given, the value of which may start from 0, and then the cycle is continued to calculate the minimum communication rate that meets the conditions through determination. However, this method is computationally intensive and the calculation speed is slow. In order to reduce the amount of calculation and improve the calculation efficiency, this embodiment uses the following formula to calculate the initial communication rate of the CAN bus:

$$B\_x = L[0] \times S[0] \times \frac{1 - Bp\_T[0]}{Bp\_T[0]};$$

wherein $B\_x$ is the initial CAN bus communication rate, $L[0]$ , $S[0]$ , and $Bp\_T[0]$ respectively represent the sending frequency, the frame length, and the allowable frame collision rate upper limit of the frame of the highest priority.

In this embodiment, there are only two priorities, namely 0X02 and 0X06, wherein 0X02 is a high priority and 0X06 is a low priority. Therefore, this embodiment uses the design index of the frame collision rate of the frame of the high priority 0X02 ≤ 3% to calculate the initial communication rate.

$$B\_x = L[0] \times S[0] \times \frac{1 - Bp\_T[0]}{Bp\_T[0]}$$

$$= (1 + 0.4 + 2 + 2 + 1 + 1 + 1 + 2.5 + 3 \times 4 + 5 \times 4 + 1.5 \times 4) \times 128 \times \frac{1 - 0.03}{0.03}$$

$$= 6259.2 \times \frac{0.97}{0.03} = 202380.8 \ bit/s$$

S2. In the case where the CAN bus communication rate and the transmission traffic of each priority are fixed, the frame collision rate of each priority may be calculated. The frame collision rate $Bp[i]$ of the frame of the priority i is calculated as follows:

$$Bp[i] = \begin{cases} ErlangB(A[i], k) = \dfrac{A[i]}{1 + A[i]}, i = 0 \\ \dfrac{ErlangB(L\_S[i], k) \times L\_S[i] - A\_L[i]}{A[i]}, i = 1, 2, \cdots, p - 1 \end{cases}$$

wherein, $i$ = 0 represents the highest priority, $i$ = 1,2,···,$p$ - 1 represents the remaining priorities in the descending order, the number of priorities planned to run on the CAN bus is $p$; $A[i]$ represents the traffic load of the priority $i$ relative to the CAN bus, $k$ = 1, $L\_S[i]$ represents the accumulated traffic load of the priority $i$, and $A\_L[i]$ represents the overflow traffic load from a higher priority to the priority i. The traffic load refers to the ratio of the traffic aggregation of each priority to the transmission rate of the CAN bus.

Event-triggered transmission refers to transmission according to instructions of users. The user clicks the query instruction at a certain moment, and the query information frame sent by the user is sent through the CAN bus. The sending frequency is completely determined by the user and it is random. It is possible that there is no query instruction at all in a day (24 hours), or there may be multiple query instructions in a certain period of time (within 10 minutes). The more the query instructions are, the greater the load traffic will be. By considering randomly triggered information frames as being sent periodically, then the traffic aggregation of the high priority is calculated in the situation with the largest load traffic, and the situation with the largest load traffic may be regarded as the worst (or the most extreme) situation. When calculating the traffic aggregation of the high priority, it is assumed that it is in the worst situation, then the traffic aggregation of the high priority is calculated as follows:128 × (1 + 0.4 + 2 + 2 + 1 + 1 + 1 + 2.5 + 3 × 4 + 5 × 4 + 1.5 × 4) = 128 × 48.9 = 6259.2 *bit/s*

The traffic aggregation of the low priority (0X06) is calculated as follows: 256 × (1 + 1 + 2 + 2 + 2 + 2.5 + 2 + 1 + 2.5 + 2 × 4) = 256 × 24 = 6144 bit/s

In the calculation formula of the frame collision rate Bp[i], the calculation formula of the traffic load $A[i]$ of each priority is as follows:

$$A[i] = \frac{L[i] \times S[i]}{B}$$

In this embodiment, first, the initial communication rate of 202380.8 bit/s calculated in the step S1 is adopted as B, then the traffic load of the frame of each priority is calculated as follows:

A[0] = 6259.2/202380.8 = 0.0309278

A[1] = 6144/202380.8=0.0303586

The frame collision rate of the frame of the high priority is directly calculated using the Erlang B formula as follows:

$$Bp[0] = \frac{A[0]}{1 + A[0]} = \frac{0.0309278}{1 + 0.0309278} = 3\%$$

For the frame collision rate of the frame of other priorities, it is necessary to first calculate the cumulative traffic load and the overflow traffic load, and the calculation formula and specific calculation results thereof are as follows.

The calculation formula of the cumulative traffic load L_S[i] is as follows:

$$L\_S[i] = \sum_0^i A[j]; j = 0,1,\cdots,i;$$

Then $L\_S[1] = \sum_0^1 A[j] = A[0] + A[1] = 0.0309278 + 0.0303586 = 0.0612864$.

The calculation formula of the overflow traffic load A_L[i] is as follows:

$$A\_L[i] = \sum_0^{i-1}(Bp[m] \times A[m]); m = 0,1,\cdots,i-1;$$

Then $A\_L[1] = \sum_0^{1-1}(Bp[m] \times A[m]) = Bp[0] \times A[0] = 3\% \times 0.0309278 = 0.09\%$.

Finally, the frame collision rate of the low priority is calculated as follows:

$$Bp[1] = \frac{ErlangB(L\_S[1], 1) \times L\_S[1] - A\_L[1]}{A[1]}$$

$$= \frac{\frac{L\_S[1]}{1 + L\_S[1]} \times L\_S[1] - A\_L[1]}{A[1]}$$

$$= \frac{\frac{0.0612864}{1 + 0.0612864} \times 0.0612864 - 0.09\%}{0.0303586}$$

$$= 8.7\%$$

S3. determining whether the frame collision rate of the frame of each priority calculated in step S2 exceeds an allowable frame collision rate upper limit associated with the respective priority; if yes, increasing the CAN bus communication rate in step S1, and returning to step S2 for continued iteration; and if not, decreasing the CAN bus communication rate in step S1, and returning to step S2 for continued iteration.

The CAN bus communication rate may be increased/decreased in the stepwise manner, e.g., with a fixed step size of 100 bit/s or 1000 bit/s; or it may be implemented by binary search, or by a combination of stepwise and binary searches.

In this embodiment, Bp[0]=3% and Bp[1]=8.7%, which do not exceed the allowed frame collision rate of 3% and 10%, and thus the CAN bus communication rate of 202380.8 bit/s in the step S1 is again decreased to 200k bit/s.

According to the communication rate of 200k bit/s, the calculated frame collision rates of the two priorities are as shown in Table 4 below:

Table 4 Frame collision rates of two priorities at the communication rate of 200k bit/s

| CAN bus communication rate (bit/s) | Priority | Traffic aggregation (bit/s) | Frame collision rate |
|---|---|---|---|
| 200,000 | 0x02 | 6259.2 | 3.03% |
| | 0x06 | 6144 | 8.70% |

According to the design index, the high priority does not meet the design index, and the low priority meets the design index, so the design index is still not met as a whole. Therefore, a value is selected between [200000 bit/s, 202380.8 bit/s] for calculation again. For example, 201190.4 bit/s is selected by binary search for calculation, and after calculation, it is found that the high priority still does not meet the design index.

Finally, through continuous iteration and search, a minimum communication rate of 202380.8 bit/s that meets the design index can be obtained through calculation. At this communication rate, the frame collision rates of the two priorities are as shown in Table 5 below:

Table 5 Frame collision rates of two priorities at the minimum communication rate

| CAN bus communication rate (bit/s) | Priority | Traffic load (bit/s) | Frame collision rate |
|---|---|---|---|
| 202380.8 | 0x02 | 6259.2 | 3.00% |
| | 0x06 | 6144 | 8.70% |

S4. outputting a minimum communication rate corresponding to the frame collision rate of the frame of each priority that does not exceed the allowable frame collision rate upper limit associated with the respective priority, so as to complete optimization.

Usually, 1000 bit/s is taken as the minimum unit for the communication rate, so the minimum communication rate of 202380.8 bit/s is output as 203k bit/s.

**Embodiment 2**

Other conditions of this embodiment are the same as those of Embodiment 1, except that the initial communication rate of the CAN bus is set to 250k bit/s.

When the CAN bus communication rate and the transmission traffic of each priority are fixed, the frame collision rate of a specific priority is calculated. The frame collision rate of the frame of the highest priority is directly calculated using the Erlang B formula, and the frame collision rate of the frame of other priorities is calculated using the Erlang B formula in combination with the cumulative traffic load and the overflow traffic load of the priority. The frame collision rates of the two priorities are calculated respectively as shown in Table 6 below:

Table 6 Frame collision rates of two priorities at the communication rate of 250k bit/s

| CAN bus communication rate (bit/s) | Priority | Traffic aggregation (bit/s) | Frame collision rate |
|---|---|---|---|
| 250,000 | 0x02 | 6259.2 | 2.45% |
| | 0x06 | 6144 | 7.06% |

According to the design index, the frame collision rate of the frame of the high priority 0 (0x02) needs to be controlled below 3%, and the frame collision rate of the frame of the low priority 1 (0x06) needs to be controlled below 10%. The above results meet the design index, but the value is too high to meet the minimum communication rate requirements of the output CAN bus. Thus, the value of the CAN bus communication rate is re-selected to be 150k bit/s.

When the value of the CAN bus communication rate is 150k bit/s, the frame collision rates of the two priorities are as shown in Table 7 below:

Table 7 Frame collision rates of two priorities at the communication rate of 150k bit/s

| CAN bus communication rate (bit/s) | Priority | Traffic aggregation (bit/s) | Frame collision rate |
|---|---|---|---|
| 150,000 | 0x02 | 6259.2 | 4.01% |
| | 0x06 | 6144 | 11.35% |

According to the design index, it is obvious that the above results do not meet the design index, so the CAN bus communication rate is adjusted again. 200k bit/s between [150k bit/s, 250k bit/s] may be selected by binary search for calculation again. The frame collision rates of the two priorities are the same as those in Table 4.

According to the design index, the frame collision rate of the frame of the high priority is 3.03%, which does not meet the design index; while the frame collision rate of the frame of the low priority is 8.70%, which meets the design index. The design index is still not met as a whole, so binary search may still be continuously performed so as to find out the minimum communication rate that meets the design index.

Finally, the minimum CAN bus resources that meet the design index can be obtained after the calculation, as shown in Table 5 above. At this time, the required CAN bus communication rate is 202380.8 bit/s. The purpose of minimizing CAN bus resources is achieved.

In the present invention, by adopting the Erlang B formula in the queuing theory, and based on data of the fixed sending frequency, the frame length and the given communication rate, the frame collision rate of the frame of each priority is accurately calculated in the descending order of priorities, then the calculated frame collision rate is compared with the preset allowed upper limit of the frame collision rate to determine whether it exceeds the allowed upper limit of the frame collision rate. If it exceeds the allowed upper limit of the frame collision rate, then the communication rate (i.e., the bus bandwidth) is further increased; and if it does not exceed the allowed upper limit of the frame collision rate, then the communication rate is decreased; and then the frame collision rate is recalculated until the minimum communication rate corresponding to not exceeding the frame collision rate upper limit allowed by the frame of each priority is acquired, so that the minimum CAN bus communication rate is calculated and resource configuration optimization of the CAN bus is realized. As can be seen from the Embodiment 2, by using the calculation formula provided in the present invention to calculate the initial communication rate, the calculation amount can be greatly reduced and the calculation efficiency can be improved.

As shall be appreciated by those skilled in the art, the embodiments of the present invention may be provided as methods, systems, or computer program products. For example, the present invention may also provide a readable storage medium on which a computer program is stored, and the computer program, when executed by a processor, can implement the steps of the CAN bus resource minimization method in the aforementioned embodiments. Thus, the present invention may take the form of an entirely hardware embodiment, an entirely software embodiment, or an embodiment combining software and hardware. Furthermore, the present invention may take the form of a computer program product embodied on one or more computer-usable storage media (including, but not limited to, a disk storage, a CD-ROM, an optical storage, etc.) having computer-usable program codes included therein.

The present invention is described with reference to flowchart diagrams and/or block diagrams of the methods, devices (systems), and computer program products according to the embodiments of the present invention. It shall be appreciated that, each process and/or block in the flowchart diagrams and/or block diagrams, and combinations of processes and/or blocks in the flowchart diagrams and/or block diagrams may be implemented by computer program instructions. These computer program instructions may be provided to a processor of a general purpose computer, a special purpose computer, an embedded processor, or other programmable data processing devices to produce a machine, such that the instructions executed by the processor of the computer or other programmable data processing devices produce a device for realizing the functions specified in one or more processes of the flowchart diagrams and/or one or more blocks of the block diagrams.

These computer program instructions may also be stored in a computer-readable storage which can guide a computer or other programmable data processing devices to operate in a particular manner, such that the instructions stored in the computer-readable storage produce an article of manufacture including the instruction means, and the instructions means implements the functions specified in one or more processes of the flowchart diagrams and/or one or more blocks of the block diagrams.

These computer program instructions may also be loaded onto a computer or other programmable data processing devices, so that a series of operating steps are performed on the computer or other programmable devices to produce computer-implemented processing, and thus instructions executed on the computer or other programmable devices provide steps for implementing the functions specified in one or more processes of the flowchart diagrams and/or one or more blocks of the block diagrams.

What described above is further detailed description of the present invention with reference to specific/preferred embodiments, and it should not be concluded that the specific embodiments of the present invention are only limited to these descriptions. In **the description of** this specification, descriptions made with reference to terms of "one embodiment," "some embodiments," "preferred embodiments," "examples," "specific examples," or "some examples" mean that specific features, structures, materials or characteristics described in combination with the embodiment or the example are included in at least one embodiment or example of the present invention. In this specification, the schematic expressions of the above terms are not necessarily directed to the same embodiment or example. Furthermore, the specific features, structures, materials or characteristics described may be combined in a suitable manner in any one or more embodiments or examples. Different embodiments or examples and the features of different embodiments or examples described in this specification may be incorporated and combined by those skilled in the art without conflicting with each other.

**Claims**

1. A CAN bus resource minimization method, comprising:

   S1. setting an initial CAN bus communication rate;
   S2. at the CAN bus communication rate in step S1 and on the basis of an Erlang B formula in the queuing theory, calculating a frame collision rate of a frame of each priority, the running of which on a CAN bus is planned;
   S3. determining whether the frame collision rate of the frame of each priority calculated in step S2 exceeds an allowable frame collision rate upper limit associated with the respective priority;
   when the frame collision rate calculated in step S2 exceed the allowable frame collision rate upper limit, increasing the CAN bus communication rate in step S1, and returning to step S2 for continued iteration;
   when the frame collision rate calculated in step S2 does not exceed the allowable frame collision rate upper limit, decreasing the CAN bus communication rate in step S1, and returning to step S2 for continued iteration; and
   S4. outputting a minimum communication rate corresponding to the frame collision rate of the frame of each priority that does not exceed the allowable frame collision rate upper limit associated with the respective priority.

2. The CAN bus resource minimization method according to Claim 1, wherein a fixed value is given as the initial CAN bus communication rate, in the step S1.

3. The CAN bus resource minimization method according to Claim 1, wherein in the step S1, the initial CAN bus communication rate is calculated by the following formula:

$$B\_x = L[0] \times S[0] \times \frac{1 - Bp\_T[0]}{Bp\_T[0]};$$

   wherein $B\_x$ is the initial CAN bus communication rate, $L[0]$, $S[0]$, and $Bp\_T[0]$ respectively represent the sending frequency, the frame length, and the allowable frame collision rate upper limit of the frame of the highest priority.

4. The CAN bus resource minimization method according to Claim 1, wherein the step S2 comprises: at the CAN bus communication rate in step S1 and on the basis of an Erlang B formula in the queuing theory, calculating the frame collision rate of the frame of each priority in the descending order of priorities, wherein the frame collision rate of the frame of the highest priority is calculated directly using the Erlang B formula, while the frame collision rate of the frame of each of the remaining priorities is calculated using the Erlang B formula in combination with a cumulative traffic load and an overflow traffic load associated with the respective priority.

5. The CAN bus resource minimization method according to Claim 4, wherein the frame collision rate $Bp[i]$ of the frame of priority $i$ is calculated as follows:

$$Bp[i] = \begin{cases} ErlangB(A[i], k) = \dfrac{A[i]}{1 + A[i]}, i = 0 \\ \dfrac{ErlangB(L\_S[i], k) \times L\_S[i] - A\_L[i]}{A[i]}, i = 1, 2, \cdots, p - 1 \end{cases}$$

   wherein, $i = 0$ represents the highest priority, $i = 1, 2, \cdots, p - 1$ represents the remaining priorities in the descending order, the number of priorities planned to run on the CAN bus is p; $A[i]$ represents the traffic load of the priority $i$ relative to the CAN bus, $k = 1$, $L\_S[i]$ represents the accumulated traffic load of the priority $i$, and $A\_L[i]$ represents the overflow traffic load from a higher priority to the priority i.

6. The CAN bus resource minimization method according to Claim 5, wherein the traffic load $A[i]$ of the priority $i$ relative to the CAN bus, the accumulated traffic load $L\_S[i]$ of the priority $i$, and the overflow traffic load $A\_L[i]$ from a higher priority to the priority $i$ are calculated respectively as follows:

$$A[i] = \frac{L[i] \times S[i]}{B};$$

$$L\_S[i] = \sum_{0}^{i} A[j]; j = 0,1,\cdots,i;$$

$$A\_L[i] = \sum_{0}^{i-1} (Bp[m] \times A[m]); m = 0,1,\cdots,i-1;$$

wherein *L[i]* and *S[i]* respectively represent the sending frequency and the frame length of the frame of the priority i, and B represents the current CAN bus communication rate.

7. The CAN bus resource minimization method according to Claim 1, wherein the increasing or decreasing of the CAN bus communication rate in the step S3 is performed by a stepwise method and/or a binary search method.

8. A computer-readable storage medium with a computer program stored thereon, wherein the computer program, when executed by a processor, can implement the steps of the CAN bus resource minimization method according to any of Claims 1 to 7.

**Patentansprüche**

1. Verfahren zur Minimierung von CAN-Bus-Ressourcen, umfassend:

S1. Einstellen einer anfänglichen CAN-Bus-Kommunikationsrate;
S2. mit der CAN-Bus-Kommunikationsrate von Schritt S1 und basierend auf einer Erlang-B-Formel in der Warteschlangentheorie, Berechnen einer Frame-Kollisionsrate eines Frames jeder Priorität, dessen Ausführung auf einem CAN-Bus geplant ist;
S3. Bestimmen, ob die Frame-Kollisionsrate des Frames jeder Priorität, die in Schritt S2 berechnet wurde, einen zulässige oberen Grenzwert für die Frame-Kollisionsrate überschreitet, der der jeweiligen Priorität zugeordnet ist;
wenn die in Schritt S2 berechnete Frame-Kollisionsrate den zulässigen oberen Grenzwert für die Fame-Kollisionsrate überschreitet, Erhöhen der CAN-Bus-Kommunikationsrate in Schritt S1 und Zurückkehren zu Schritt S2 zu der weiteren Iteration;
wenn die in Schritt S2 berechnete Frame-Kollisionsrate den zulässigen oberen Grenzwert für die Frame-Kollisionsrate nicht überschreitet, Verringern der CAN-Bus-Kommunikationsrate in Schritt S1 und Zurückkehren zu Schritt S2 zu der weiteren Iteration; und
S4. Ausgeben einer minimalen Kommunikationsrate, die der Frame-Kollisionsrate des Frames jeder Priorität entspricht, die den zulässigen oberen Grenzwert für die Frame-Kollisionsrate nicht überschreitet, der der jeweiligen Priorität zugeordnet ist.

2. Verfahren zur Minimierung von CAN-Bus-Ressourcen nach Anspruch 1, wobei in Schritt S1 ein fester Wert als anfängliche CAN-Bus-Kommunikationsrate angegeben ist.

3. Verfahren zur Minimierung von CAN-Bus-Ressourcen nach Anspruch 1, wobei in Schritt S1 die anfängliche CAN-Bus-Kommunikationsrate nach folgender Formel berechnet wird:

$$B\_x = L[0] \times S[0] \times \frac{1 - Bp\_T[0]}{Bp\_T[0]};$$

wobei *B_x* die anfängliche CAN-Bus-Kommunikationsrate ist, wobei *L[0]*, S[0] und *Bp_T*[0] jeweils die Sendefrequenz, die Frame-Länge und der zulässige obere Grenzwert für die Frame-Kollisionsrate des Frames der höchsten Priorität darstellen.

**4.** Verfahren zur Minimierung von CAN-Bus-Ressourcen nach Anspruch 1, wobei der Schritt S2 Folgendes umfasst: mit der CAN-Bus-Kommunikationsrate aus Schritt S1 und basierend auf einer Erlang-B-Formel in der Warteschlangentheorie, Berechnen der Frame-Kollisionsrate des Frames jeder Priorität in absteigender Prioritätsreihenfolge, wobei die Frame-Kollisionsrate des Frames der höchsten Priorität direkt unter Verwendung der Erlang-B-Formel berechnet wird, während die Frame-Kollisionsrate des Frames jeder der übrigen Prioritäten unter Verwendung der Erlang-B-Formel in Kombination mit einer kumulativen Verkehrslast und einer der jeweiligen Priorität zugeordneten Überlauf-Verkehrslast berechnet wird.

**5.** Verfahren zur Minimierung von CAN-Bus-Ressourcen nach Anspruch 4, wobei die Frame-Kollisionsrate $Bp[i]$ des Frames der Priorität i wie folgt berechnet wird:

$$Bp[i] = \begin{cases} ErlangB(A[i], k) = \dfrac{A[i]}{1 + A[i]}, i = 0 \\ \dfrac{ErlangB(L\_S[i], k) \times L\_S[i] - A\_L[i]}{A[i]}, i = 1, 2, \cdots, p - 1 \end{cases}$$

wobei $i = 0$ die höchste Priorität darstellt, $i = 1, 2, ...,p$ - 1 die verbleibenden Prioritäten in absteigender Reihenfolge darstellt, die Anzahl der Prioritäten, die auf dem CAN-Bus ausgeführt werden sollen, p ist; $A[i]$ die Verkehrslast der Priorität $i$ relativ zu dem CAN-Bus darstellt, $k = 1$, $L\_S[i]$ die akkumulierte Verkehrslast der Priorität $i$ darstellt und $A\_L[i]$ die Überlauf-Verkehrslast von einer höheren Priorität auf die Priorität i darstellt.

**6.** Verfahren zur Minimierung von CAN-Bus-Ressourcen nach Anspruch 5, wobei die Verkehrslast $A[i]$ der Priorität i relativ zu dem CAN-Bus, die akkumulierte Verkehrslast $L\_S[i]$ der Priorität $i$ und die Überlauf-Verkehrslast $A\_L[i]$ von einer höheren Priorität bis zu der Priorität i jeweils wie folgt berechnet werden:

$$A[i] = \frac{L[i] \times S[i]}{B};$$

$$L\_S[i] = \sum_0^i A[j]; j = 0, 1, \cdots, i;$$

$$A\_L[i] = \sum_0^{i-1} (Bp[m] \times A[m]); m = 0, 1, \cdots, i - 1;$$

wobei $L[i]$ und $S[i]$ jeweils die Sendefrequenz und die Framelänge des Frames der Priorität i darstellen und B die aktuelle CAN-Bus-Kommunikationsrate darstellt.

**7.** Verfahren zur Minimierung von CAN-Bus-Ressourcen nach Anspruch 1, wobei das Erhöhen oder Verringern der CAN-Bus-Kommunikationsrate in dem Schritt S3 durch ein schrittweises Verfahren und/oder ein binäres Suchverfahren durchgeführt wird.

**8.** Computerlesbares Speichermedium mit einem darauf gespeicherten Computerprogramm, wobei das Computerprogramm, wenn es von einem Prozessor ausgeführt wird, die Schritte des Verfahrens zur Minimierung von CAN-Bus-Ressourcen nach einem der Ansprüche 1 bis 7 umsetzen kann.

**Revendications**

**1.** Procédé de réduction au minimum de ressources de bus CAN, comportant :

S1. la définition d'un débit de communication de bus CAN initial ;
S2. au débit de communication de bus CAN de l'étape S1 et sur la base d'une formule Erlang B dans la théorie de mise en file d'attente, le calcul d'un taux de collision de trame d'une trame de chaque priorité, dont l'exécution sur un bus CAN est planifiée ;
S3. la détermination du fait que le taux de collision de trame de la trame de chaque priorité calculé à l'étape S2 dépasse ou non une limite supérieure de taux de collision de trame admissible associée à la priorité respective ; lorsque le taux de collision de trame calculé à l'étape S2 dépasse la limite supérieure de taux de collision de trame admissible, l'augmentation du débit de communication de bus CAN à l'étape S1, et le retour à l'étape S2 pour une itération continue ;

lorsque le taux de collision de trame calculé à l'étape S2 ne dépasse pas la limite supérieure de taux de collision de trame admissible, la diminution du débit de communication de bus CAN à l'étape S1, et le retour à l'étape S2 pour une itération continue ; et

S4. la délivrance en sortie d'un débit de communication minimal correspondant au taux de collision de trame de la trame de chaque priorité qui ne dépasse pas la limite supérieure de taux de collision de trame admissible associée à la priorité respective.

2. Procédé de réduction au minimum de ressources de bus CAN selon la revendication 1, dans lequel une valeur fixe est donnée comme débit de communication de bus CAN initial, à l'étape S1.

3. Procédé de réduction au minimum de ressources de bus CAN selon la revendication 1, dans lequel, à l'étape S1, le débit de communication de bus CAN initial est calculé par la formule suivante :

$$B\_x = L[0] \times S[0] \times \frac{1 - Bp\_T[0]}{Bp\_T[0]};$$

dans lequel $B\_x$ est le débit de communication de bus CAN initial, $L[0]$, $S[0]$ et $Bp\_T[0]$ représentent respectivement la fréquence d'envoi, la longueur de trame et la limite supérieure de taux de collision de trame admissible de la trame de la priorité la plus élevée.

4. Procédé de réduction au minimum de ressources de bus CAN selon la revendication 1, dans lequel l'étape S2 comporte : au débit de communication de bus CAN de l'étape S1 et sur la base d'une formule Erlang B dans la théorie de mise en file d'attente, le calcul du taux de collision de trame de la trame de chaque priorité dans l'ordre décroissant de priorités, dans lequel le taux de collision de trame de la trame de la priorité la plus élevée est calculé directement à l'aide de la formule Erlang B, tandis que le taux de collision de trame de la trame de chacune des priorités restantes est calculé à l'aide de la formule Erlang B en combinaison avec une charge de trafic cumulée et une charge de trafic de débordement associées à la priorité respective.

5. Procédé de réduction au minimum de ressources de bus CAN selon la revendication 4, dans lequel le taux de collision de trame $Bp[i]$ de la trame de priorité $i$ est calculé comme suit :

$$Bp[i] = \begin{cases} ErlangB(A[i], k) = \dfrac{A[i]}{1 + A[i]}, i = 0 \\ \dfrac{ErlangB(L\_S[i], k) \times L\_S[i] - A\_L[i]}{A[i]}, i = 1, 2, \cdots, p - 1 \end{cases}$$

dans lequel, i = 0 représente la priorité la plus élevée, i = 1,2...,p - 1 représente les priorités restantes dans l'ordre décroissant, le nombre de priorités planifiées pour s'exécuter sur le bus CAN est $p$ ; $A[i]$ représente la charge de trafic de la priorité i par rapport au bus CAN, $k = 1$, $L\_S[i]$ représente la charge de trafic accumulée de la priorité $i$, et $A\_L[i]$ représente la charge de trafic de débordement d'une priorité plus élevée à la priorité i.

6. Procédé de réduction au minimum de ressources de bus CAN selon la revendication 5, dans lequel la charge de trafic A[i] de la priorité i par rapport au bus CAN, la charge de trafic accumulée $L\_S[i]$ de la priorité $i$, et la charge de trafic de débordement $A\_L[i]$ d'une priorité plus élevée à la priorité i sont calculées respectivement comme suit :

$$A[i] = \frac{L[i] \times S[i]}{B};$$

$$L\_S[i] = \sum_{0}^{i} A[j]; j = 0, 1, \cdots, i;$$

$$A\_L[i] = \sum_{\mathbf{0}}^{i-1}(Bp[m] \times A[m]); \; m = 0,1,\cdots,i-1;$$

où $L[i]$ et $S[i]$ représentent respectivement la fréquence d'envoi et la longueur de trame de la trame de la priorité $i$, et B représente le débit de communication de bus CAN actuel.

7. Procédé de réduction au minimum de ressources de bus CAN selon la revendication 1, dans lequel l'augmentation ou la diminution du débit de communication de bus CAN à l'étape S3 est réalisée par un procédé par étapes et/ou un procédé de recherche binaire.

8. Support de stockage lisible par ordinateur avec un programme informatique stocké sur celui-ci, dans lequel le programme informatique, lorsqu'il est exécuté par un processeur, peut mettre en œuvre les étapes du procédé de réduction au minimum de ressources de bus CAN selon l'une quelconque des revendications 1 à 7.

Setting an initial CAN bus communication rate

S1

On the basis of an Erlang B formula in the queuing theory, calculating a frame collision rate of a frame of each priority, the running of which on a CAN bus is planned

S2

Increasing the communication rate

Decreasing the communication rate

Yes

Whether the frame collision rate of the frame of each priority exceeds the allowable frame collision rate upper limit associated with the respective priority

No

S3

Outputting a minimum communication rate corresponding to the frame collision rate of the frame of each priority that does not exceed the allowable frame collision rate upper limit associated with the respective priority

S4

FIG. 1

FIG. 2

EP 4 525 374 B1

Start

Determining the priority number p and the priority level i of the frame on the CAN bus

i=0

Setting the initial communication rate B_x, or calculating the initial communication rate B_x according to the sending frequency L[0], the frame length S[0] and the allowable frame collision rate upper limit Bp_T[0] of the frame of the priority 0

According to the communication rate, calculating the traffic load A[0] and the frame collision rate Bp[0] of the frame of the priority 0

i=i+1

i < p

Yes

Determining the sending frequency L[i], the frame length S[i] and the allowable frame collision rate upper limit Bp_T[i] of the frame of the priority i

Calculating the traffic load A[i], the cumulative traffic load L_S[i] and the overflow traffic load A_L[i] of the priority i according to the communication rate

Calculating the frame collision rate Bp[i] of the frame of the priority i

No

Whether the frame collision rate Bp[i] of the frame of each priority i exceed the allowable frame collision rate upper limit Bp_T[i] associated with the respective priority i

Yes

Increasing the CAN bus communication rate by stepwise and/or binary search

No

Decreasing the CAN bus communication rate by stepswise and/or binary search

Outputting a minimum communication rate corresponding to the frame collision rate of the frame of each priority that does not exceed the allowable frame collision rate upper limit associated with the respective priority

End

FIG. 3

**EP 4 525 374 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020174471 A1